# FASCICULE DE BREVET EUROPEEN

(11) **EP 2 999 138 B1**
(45) Date de publication et mention de la délivrance du brevet: **23.10.2019**
(21) Numéro de dépôt: 15186002.0
(22) Date de dépôt: 21.09.2015
(51) Int. Cl.: B64G 1/10, H04B 7/185

(54) **PROCEDE D'ALLOCATION DYNAMIQUE DE LA PUISSANCE INSTANTANEE DISPONIBLE D'UN SATELLITE ET SYSTEME ASSOCIE**
VERFAHREN DER DYNAMISCHEN ZUTEILUNG DER VERFÜGBAREN IST-LEISTUNG EINES SATELLITEN, UND ENTSPRECHENDES SYSTEM
METHOD FOR DYNAMICALLY ALLOCATING THE AVAILABLE INSTANTANEOUS POWER OF A SATELLITE AND ASSOCIATED SYSTEM

(30) Priorité: 22.09.2014 FR 1402107
(43) Date de publication de la demande: 23.03.2016
(73) Titulaire: THALES, 92400 Courbevoie (FR)
(72) Inventeur: TAYRAC, Pierre, 31180 Saint Géniès Bellevue (FR); COURSEILLE, Olivier, 31320 Auzeville Tolosane (FR); BLOSSE, Cyrille Yves Joël, 31037 Toulouse Cedex 1 (FR); ROGER, Bruno, 31037 Toulouse Cedex 1 (FR)
(74) Mandataire: Brunelli, Gérald

(56) Documents cités:
- EP-A1- 0 805 568
- EP-A2- 0 901 219
- WO-A1-99/49590

## Description

La présente invention concerne le domaine des télécommunications par satellite. La présente invention concerne plus particulièrement un procédé et un système de gestion dynamique de la puissance instantanée disponible d'un satellite.

L'optimisation de la capacité d'un satellite de télécommunications consiste à mettre en adéquation la puissance totale disponible à bord du satellite, avec le besoin de puissance demandé par l'ensemble des réseaux accédant au satellite. Actuellement, lorsqu'un système de télécommunication par satellite est déployé, on planifie au sol l'utilisation de l'énergie du satellite en considérant une puissance statique disponible sur le satellite. La valeur de cette puissance prend en compte une marge couvrant l'ensemble des incertitudes sur une échelle de temps de quelques mois voire plusieurs années. De même, une puissance satellite fixe est allouée à chaque réseau d'accès satellite, représentative d'un débit utile de transmission de ce réseau. Cette planification suppose que la puissance disponible à bord ne varie pas, de même que le débit de transmission des réseaux d'accès satellite.

Cependant, la puissance disponible d'un satellite de télécommunication varie au cours du temps. Ces variations peuvent être dues, par exemple, au vieillissement du satellite et de son électronique, aux variations de la charge utile dues à des problématiques thermiques et/ou thermoélastiques, aux problèmes de pointage des antennes. De même, les Réseaux d'Accès Satellite subissent des variations opérationnelles de trafic conduisant à des besoins en puissance bord variables dans le temps. Des procédés d'allocation dynamique de puissance de l'art antérieur sont connus par exemple des demandes de brevet WO 99/49590 A1, EP 0 805 568 A1 ou encore EP 0 901 219 A2.

Du fait de l'utilisation d'une puissance bord fixe, une partie de la puissance réellement disponible à bord du satellite n'est pas utilisée et est perdue. Cette puissance supplémentaire pourrait, par exemple, permettre d'accroitre la capacité du système de communication en augmentant le débit et/ou la disponibilité des liaisons de télécommunication. L'énergie à bord d'un satellite étant limitée, il est intéressant de proposer une solution permettant d'optimiser l'utilisation de la puissance instantanée disponible.

De même, l'emploi d'une puissance fixe allouée à chaque réseau d'accès satellite ne permet pas s'adapter au trafic réel, et représente donc une perte d'efficacité.

Une solution de l'art antérieur pour augmenter l'utilisation des ressources du satellite est de surexploiter la puissance dudit satellite (« surbooking des capacités satellite ») surtout en début de mission du satellite. Un inconvénient de cette pratique est que les effets de cette surexploitation ne peuvent pas être maîtrisés techniquement.

Un but de l'invention est notamment de corriger un ou plusieurs des inconvénients de l'art antérieur en proposant une solution permettant d'exploiter la ressource en puissance réellement disponible au niveau du satellite, tout en s'adaptant aux besoins réels des réseaux d'accès satellite.

A cet effet, l'invention a pour objet un procédé d'allocation dynamique de puissance pour un groupe d'au moins un réseau d'accès satellite associé à un groupe d'au moins un satellite, ledit groupe d'au moins un réseau d'accès satellite comprenant une pluralité de gestionnaires d'allocation de la ressource, ledit procédé étant mis en oeuvre par un dispositif d'allocation dynamique de puissance et comprenant :
- une étape d'acquisition d'un signal, issue des télémesures, représentatif d'une puissance instantanée disponible à bord d'au moins un satellite et d'un signal représentatif d'un besoin de débit dans chaque gestionnaire d'allocation de la ressource de chaque réseau d'accès satellite,
- une étape de conversion, pour chaque gestionnaire d'allocation de la ressource du groupe d'au moins un réseau d'accès satellite, du signal représentatif du besoin de débit dans ledit réseau d'accès satellite en une valeur correspondant à la puissance consommée à bord du satellite pour obtenir ce débit,
- une étape de calcul d'une marge totale de puissance égale à la différence entre la puissance disponible à bord du satellite et la somme des puissances consommées par chaque gestionnaire d'allocation de la ressource,
- une étape d'allocation de puissance aux différents gestionnaire d'allocation de la ressource du groupe d'au moins un réseau d'accès satellite, la valeur de puissance allouée étant fonction de la marge totale de puissance calculée.

Suivant un mode de mise en oeuvre :
- si la marge totale de puissance est supérieure à un premier seuil prédéterminée, lors de l'étape d'allocation de puissance un module d'allocation dynamique de puissance alloue aux différents gestionnaires d'allocation de la ressource du groupe d'au moins un réseau d'accès satellite les niveaux de puissance consommée à bord du satellite calculée précédemment,
- si la marge totale de puissance est inférieure à un second seuil prédéterminé, inférieur ou égal audit premier seuil prédéterminé, lors de l'étape d'allocation de puissance, un module d'allocation dynamique de puissance alloue aux différents gestionnaires d'allocation de la ressource du groupe d'au moins un réseau d'accès satellite des niveaux de puissance consommée à bord du satellite calculés précédemment,

Suivant un mode de mise en oeuvre, lors de l'étape de réduction de puissance allouée aux différents gestionnaires d'allocation de la ressource, le dispositif d'allocation dynamique de puissance alloue aux différents gestionnaires d'allocation de la ressource un niveau de puissance prédéterminé par défaut si la marge de puissance est inférieure à un troisième seuil prédéterminé.

Suivant un mode de mise en oeuvre, le signal représentatif du besoin de débit pour au moins un gestionnaire d'allocation de la ressource est défini en fonction du débit effectivement transmis sur une période de temps.

Suivant un mode de mise en oeuvre, le signal représentatif de la puissance instantanée disponible à bord d'un satellite est transmis au dispositif d'allocation dynamique par un centre de contrôle des satellites.

Suivant un mode de mise en oeuvre, le procédé comprend en outre une étape d'acquisition d'un signal représentatif de la qualité de service associée aux données à transmettre par chaque gestionnaire d'allocation de la ressource et selon lequel l'allocation de puissance est réalisée en fonction desdites informations de qualité.

Suivant un mode de mise en oeuvre, les différents calculs sont réalisés à l'aide d'au moins un algorithme stocké dans une zone mémoire du système d'allocation dynamique de puissance.

L'invention a également pour objet un système d'allocation dynamique de puissance configuré pour mettre en oeuvre le procédé précédemment décrit comprenant un dispositif d'allocation dynamique de puissance et au moins un réseau d'accès satellite,
ledit groupe d'au moins un réseau d'accès satellite comprenant une pluralité de gestionnaires d'allocation de la ressource, chaque gestionnaire d'allocation de la ressource étant configuré pour transmettre des donnés à au moins un modem, chaque gestionnaire d'allocation de la ressource étant connecté au dispositif d'allocation dynamique de puissance et chaque gestionnaire d'allocation de la ressource comprenant un dispositif de mesure configuré pour mesurer le débit dans ledit gestionnaires d'allocation de la ressource et délivrer un signal représentatif dudit débit et pour transmettre ce signal au dispositif d'allocation dynamique de puissance,
ledit dispositif d'allocation dynamique de puissance comprenant un module de calcul configuré pour recevoir des signaux représentatif de différentes grandeurs et effectuer des calculs avec ces grandeurs, un module configuré pour allouer un niveau de puissance aux différents gestionnaires d'allocation de la ressource du groupe d'au moins un réseau d'accès satellite et au moins une zone mémoire.

Le système comprend un centre de contrôle des satellites configuré pour recevoir les données de télémétrie d'au moins un satellite, lesdites données de télémétrie comprenant la puissance instantanée disponible à bord de chaque satellite, et transmettre au dispositif d'allocation dynamique de puissance un signal représentatif de la puissance instantanée disponible à bord de chaque satellite.

Suivant un mode de réalisation, le système comprend un centre de supervision des liaisons configuré pour calculer et transmettre un signal représentatif de la puissance instantanée disponible à bord de chaque satellite.

D'autres particularités et avantages de la présente invention apparaîtront plus clairement à la lecture de la description ci-après, donnée à titre illustratif et non limitatif, et faite en référence aux dessins annexés, dans lesquels :
- La figure 1 représente un système de télécommunication connu de l'art antérieur ;
- La figure 2 représente un exemple de réalisation d'un système d'allocation dynamique de la puissance instantanée disponible d'au moins un satellite selon l'invention ;

Il convient de noter que l'utilisation de l'expression " puissance instantanée disponible du satellite" désigne la puissance instantanée disponible au niveau des transpondeurs du satellite. Cette puissance instantanée disponible correspond à la puissance disponible à bord du satellite en prenant en compte notamment les variations de charge de la ou les batteries et de l'environnement du satellite comme par exemple l'ensoleillement ou le vieillissement du matériel. Cette puissance instantanée disponible est à différentier de la puissance statique disponible qui prend en compte des marges pour modéliser ces variations citées ci-dessus.

Le principe de l'invention repose sur un couplage entre le ou les satellites de télécommunication et la ou les stations au sol de manière à l'informer régulièrement de la valeur de la puissance instantanée disponible à bord du ou des satellites et ainsi pouvoir optimiser l'utilisation des ressources en puissance instantanée disponibles au niveau de chaque satellite de façon dynamique. De plus, une mutualisation des besoins en puissance des réseaux d'accès permet d'optimiser ces besoins en puissances, et leurs variations dans le temps.

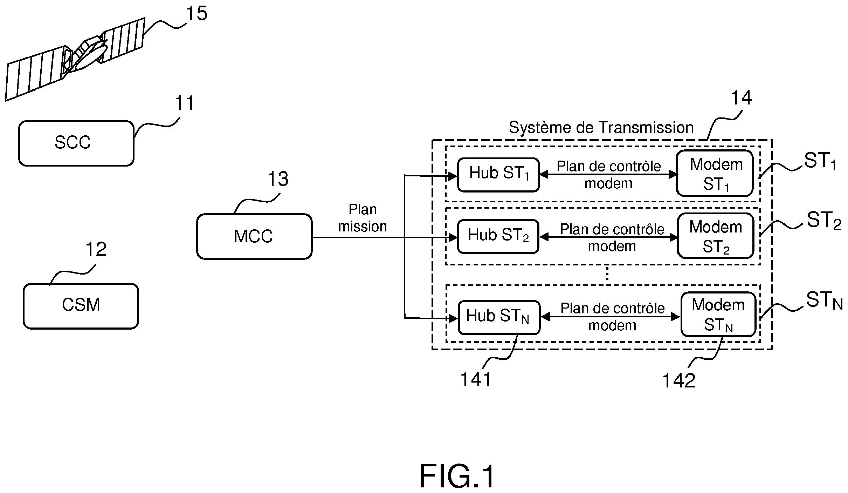

La figure 1 représente un système de télécommunication connu de l'art antérieur. Le système comprend un centre de contrôle des satellites 11 ou SCC pour *Satellite Control Center* selon la terminologie anglo-saxonne. Le centre de contrôle des satellites surveille en permanence le comportement du ou des satellites dont il a la charge notamment à l'aide des données de télémesure. Le centre de contrôle des satellites est le moyen au sol qui contrôle le ou les satellites et qui permet d'assurer le bon fonctionnement du satellite. Il permet, par exemple, de recueillir des informations sur la puissance instantanée réellement disponible à bord du satellite et donc de la marge de puissance supplémentaire disponible par rapport à la puissance statique.

Le centre de surveillance des liaisons 12 ou CSM pour *Communication Spectrum Monitoring* selon la terminologie anglo-saxonne surveille la charge utile (ou *payload* selon la terminologie anglo-saxonne) du satellite. Il fournit notamment les caractéristiques radiofréquences et numériques des transpondeurs du satellite. Il permet également de détecter des évènements indésirables comme par exemple des problèmes d'interférences ou de brouillage.

Les réseaux d'accès satellite 14 comportent une pluralité de gestionnaires d'allocation de la ressource (ou hub) 141, chaque gestionnaire d'allocation de la ressource 141 gérant au moins un modem 142. Un réseau d'accès satellite comprend un gestionnaire d'allocation de la ressource 141 et au moins un modem 142. Afin de ne pas surcharger la figure, seul un modem 142 par gestionnaire d'allocation de la ressource 141 est représenté sur la figure 1. Les réseaux d'accès satellite 14 sont connectés à un centre de contrôle de mission 13 ou MCC pour *Mission Contrôle Center* selon la terminologie anglo-saxonne. Ce centre 13 assure la gestion opérationnelle de la charge utile du satellite. Il définit notamment le plan de mission pour le centre de contrôle des satellites 11 et pour chaque réseau d'accès satellite 14. Ce plan de mission comprend entre autres la table d'allocation de puissance définissant le taux de partage de la puissance entre les différents gestionnaires d'allocation de la ressource 141 des différents réseaux d'accès satellite 14.

Comme vu précédemment le plan de mission est défini en début de mission et reste figé tout au long de ladite mission jusqu'à ce qu'un nouveau plan de mission soit planifié manuellement par un opérateur au niveau du centre de contrôle de mission 13. De même la connexion entre le centre de contrôle de mission 13 et le réseau d'accès satellite 14 est unidirectionnelle et sert entre autres à l'allocation de la puissance entre les différents gestionnaires d'allocation de la ressource 141 suivant le taux de partage définit dans le plan de mission. Ainsi chaque gestionnaire d'allocation de la ressource fonctionne de façon indépendante.

Les centres de contrôle des satellites 11, de surveillance des liaisons 12, de contrôle de mission 13 ainsi que les différents gestionnaires d'allocation de la ressource 141 des réseaux d'accès satellite 14 sont généralement répartis dans une station sol. Les différents modems 142 sont localisés au niveau des utilisateurs.

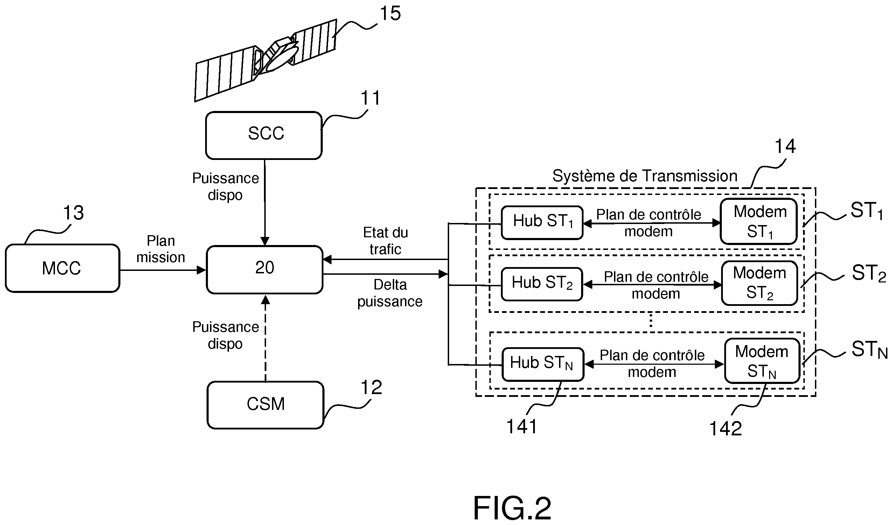

La figure 2 représente un exemple de mode de réalisation d'un système d'allocation dynamique de la puissance instantanée disponible d'au moins un satellite selon l'invention.

Le système peut comprendre un centre de contrôle des satellites 11, un centre de contrôle de mission 13 et au moins un réseau d'accès satellite 14. Dans certains modes de réalisation, le système peut également comprendre un centre de surveillance des liaisons 12.

Dans la figure 2 le système ne gère qu'un satellite 15. Cet exemple n'est nullement limitatif et l'invention peut être généralisée au cas où le système serait en relation avec une pluralité de satellites 15.

Le ou les satellites 15 peuvent être du type transparent, c'est-à-dire que ces satellites 15 réfléchissent les signaux reçus d'une ou plusieurs stations au sol à l'aide de transpondeurs. Les satellites peuvent aussi être de type régénératif, avec démodulation des signaux reçus et modulation des signaux transmis. Le groupe d'au moins un satellite 15 comprend au moins un satellite multicanaux.

Le dispositif d'allocation dynamique 20 de la puissance instantanée disponible d'au moins un satellite 15 est en charge de l'allocation des ressources en puissance aux différents gestionnaires d'allocation de la ressource 141 des réseaux d'accès satellite 14 en fonction des demandes de trafic en provenance des groupes de modems 142 connectés aux différents gestionnaires d'allocation de la ressource 141 et en fonction de la puissance disponible au niveau du satellite. Ce dispositif 20 est intercalé entre le centre de contrôle de mission 11 et les réseaux d'accès satellite 14. Il permet d'établir un lien entre la charge utile du satellite 15 et la station au sol pour échanger des données permettant de définir la valeur de la puissance instantanée disponible à bord du satellite.

Dans le mode de réalisation illustré figure 2, le dispositif d'allocation dynamique 20 est connecté au centre de contrôle des satellites 11, au centre de contrôle de mission 13 et aux réseaux d'accès satellite 14. Le dispositif d'allocation dynamique 20 peut être connecté à un centre de surveillance des liaisons 12. Le groupe de réseaux d'accès satellite comprend N réseaux d'accès satellite référencés ST₁ à ST_{N}. Comme précédemment, afin de ne pas surcharger la figure, seul un modem 142 est représenté par réseau d'accès satellite. Bien entendu, les réseaux d'accès satellite peuvent en comporter un nombre supérieur.

Afin de gérer dynamiquement la puissance instantanée disponible à bord d'un satellite, le dispositif d'allocation dynamique 20 réalise l'acquisition d'un signal, issue des télémesures, représentatif de la valeur des puissances instantanées disponibles à bord du satellite 15 pour différents sous-ensembles de la charge utile. Cette acquisition peut être réalisée à intervalles réguliers ou de façon non régulière dans le temps. Selon la configuration du satellite et de l'optimisation recherchée, ces sous-ensembles peuvent être par exemple des amplificateurs haute puissance, des ensembles d'amplificateurs haute puissance (d'une même couverture émission satellite), la charge utile. Suivant un mode de réalisation, l'intervalle de temps entre les différentes acquisitions peut être de quelques minutes. Ce signal peut être enregistré au moment de l'acquisition dans une zone mémoire du système de façon à être utilisé ultérieurement. De façon avantageuse, la mise à jour périodique des performances du satellite permettant de prendre en compte les fluctuations des performances du satellite 15 dans le temps.

Suivant un mode de réalisation, le signal représentatif de la puissance instantanée disponible à bord du satellite 15 peut être transmis par le centre de contrôle des satellites 11. Comme vu précédemment, parmi les signaux de télémétrie transmis par le satellite 15 se trouve des signaux représentatifs des niveaux de puissance instantanée disponible au niveau du satellite pour les différents sous-ensembles de la charge utile. Le centre de contrôle des satellites 11 peut donc extraire cette information et la transmettre au dispositif d'allocation dynamique 20 sous la forme de signaux représentatifs de ces grandeurs. A cet effet, le centre de contrôle des satellites 11 peut comprendre un module configuré pour extraire des signaux de télémétrie transmis par le satellite 15, les signaux représentatifs des niveaux de puissance instantanée disponible du satellite et transmettre au dispositif d'allocation dynamique 20 des signaux représentatifs de ces valeurs.

Suivant un autre mode de réalisation, les signaux représentatifs des puissances disponibles à bord de chaque satellite sont fournis par le centre de surveillance des liaisons 12. Ce centre 12 peut comporter, par exemple, un dispositif de mesure du type analyseur de spectre qui mesure les niveaux de puissance reçue et délivre des signaux représentatifs de ces puissances reçues. Ce dispositif mesure également les niveaux d'utilisation des amplificateurs de bord. A partir de ces mesures le dispositif de mesure du centre de surveillance des liaisons 12 calcule les puissances disponibles instantanées disponibles au niveau du satellite et délivre des signaux représentatifs de ces puissances instantanées disponibles à bord du satellite qu'il transmet au dispositif d'allocation de puissance 20.

Suivant un mode de réalisation, le centre de contrôle des satellites 11 et le centre de supervision des liaisons 12 sont connectés au dispositif d'allocation dynamique 20 et peuvent lui transmettre ensemble les signaux représentatifs des puissances instantanées disponibles à bord du satellite 15 par exemple par soucis de redondance.

Le dispositif d'allocation dynamique 20 réalise également, pour chaque gestionnaire d'allocation de la ressource 141 de chaque réseau d'accès satellite 14, l'acquisition d'un signal représentatif du débit de données du gestionnaire d'allocation de la ressource 141 considéré. Pour cela, chaque gestionnaire d'allocation de la ressource 141 peut comprendre un dispositif de mesure configuré pour mesurer les différents débits élémentaires en provenance des différents modems 142 dans ledit gestionnaire d'allocation de la ressource et délivrer un signal représentatif d'un débit global. Ce dispositif de mesure peut également être configuré pour transmettre ce signal au dispositif d'allocation dynamique 20 de puissance. Ce signal peut être enregistré simultanément au moment de l'acquisition dans une zone mémoire du système d'allocation dynamique de puissance de façon à être utilisé ultérieurement. En plus de ces données de débit, le dispositif peut également acquérir au niveau de chaque gestionnaire d'allocation de la ressource des signaux représentatifs d'autres informations, comme la qualité de service des données à transmettre. Cette information de qualité de service peut, par exemple, servir de critère pour allocation de puissance aux différents gestionnaires d'allocation de la ressource 141.

A ce moment le dispositif d'allocation dynamique 20 dispose de la valeur de la puissance disponible et des débits requis par chaque réseau d'accès satellite. En fonction de l'évolution de la demande de débit en provenance des différents gestionnaires d'allocation de la ressource 141, le module d'allocation dynamique de puissance peut ainsi, par exemple à l'aide d'un algorithme stocké dans une zone mémoire du système d'allocation dynamique de puissance, augmenter ou diminuer la puissance allouée à un ou plusieurs gestionnaires d'allocation de la ressource 141. Ce principe est appliqué pour l'ensemble des réseaux d'accès satellite 14.

En cas de conflit, en particulier en cas de manque de puissance disponible pour répondre à un besoin de débit pour un ou plusieurs réseau d'accès satellite 14, un mécanisme de priorité peut être mis en place dans l'algorithme d'allocation de la puissance, de manière à augmenter en priorité, la puissance des réseaux d'accès satellite 14 les plus prioritaires, en utilisant par exemple les informations de qualité de service données par les gestionnaires d'allocation de la ressource.

Suivant un mode de mise en oeuvre, le signal représentatif du besoin de débit pour au moins un gestionnaire d'allocation de la ressource 141 est défini en fonction du débit effectivement transmis sur une période de temps prédéterminée.

Chaque signal représentatif du besoin de débit des gestionnaires d'allocation de la ressource 141 est converti en une valeur correspondant à la puissance qui serait consommée à bord du satellite 15 pour obtenir ce débit. Cette conversion peut consister en la réalisation, pour chaque signal représentatif du besoin en débit des gestionnaires d'allocation de la ressource 141, d'un calcul de bilan de liaison permettant d'identifier les niveaux de puissance sol et bord minimum assurant la transmission. Cette conversion peut être réalisée au niveau du réseau d'accès satellite 14 ou au niveau du dispositif d'allocation dynamique 20 par exemple par un module de calcul. Suivant un mode de réalisation, la conversion peut être réalisée à l'aide d'un algorithme stocké dans une zone mémoire du système d'allocation dynamique de puissance, par exemple une zone mémoire du dispositif d'allocation dynamique de puissance 20. Les différentes puissances consommées au niveau bord pour les différents gestionnaires d'allocation de la ressource sont ensuite sommées, de façon à évaluer les puissances totales consommées par le satellite 15, nécessaires pour permettre le débit de données total transitant dans tous les gestionnaires d'allocation de la ressource 141 du réseau d'accès satellite 14.

Ces valeurs de puissance totale sont comparées aux valeurs de puissance disponible à bord du satellite de façon à vérifier si une allocation, aux gestionnaires d'allocation de la ressource 141, des puissances calculées entrainerait une saturation des sous ensembles de la charge utile ou si une telle allocation leur laisserait de la puissance disponible.

Le module de calcul du dispositif d'allocation dynamique 20 définie alors des marges totales de puissance, égales à la différence entre la somme des puissances disponibles à bord du satellite et la somme des puissances correspondant aux débits souhaités par les différents gestionnaires d'allocation de la ressource 141 de chaque sous ensemble de la charge utile.

Le dispositif d'allocation dynamique 20 de puissance peut ainsi allouer aux différents gestionnaires d'allocation de la ressource 141 une valeur (positive ou négative) de puissance en fonction de la valeur des marges totales de puissance, comparativement à des seuils, pour chaque sous ensemble de la charge utile.

Si la marge totale est supérieure à un premier seuil prédéterminé, le dispositif d'allocation dynamique 20 peut allouer, à chaque gestionnaire d'allocation de la ressource 141, la puissance calculée précédemment compte tenu par exemple de sa requête de débit ou de son débit mesuré. A cet effet, le dispositif d'allocation dynamique 20 de puissance peut comporter un module d'allocation de puissance configuré pour allouer un certain niveau de puissance aux différents gestionnaires d'allocation de la ressource 141.

Une marge totale supérieure à audit premier seuil prédéterminé peut traduire une sous exploitation de la puissance instantanée disponible d'au moins un sous ensemble de la charge utile. Le module d'allocation de puissance peut donc allouer plus de puissance à certains gestionnaires d'allocation de la ressource des réseaux d'accès satellite 14.

Si la marge totale est inférieure à un deuxième seuil prédéterminé, ledit deuxième seuil étant inférieur ou égal au premier seuil précédemment cité, le dispositif d'allocation dynamique 20 ne peut pas allouer à chaque gestionnaire d'allocation de la ressource 141, la valeur de puissance équivalente à la valeur de débit souhaité. Suivant un mode de mise en oeuvre, le dispositif d'allocation dynamique 20 de puissance peut réduire la valeur des différentes puissances à allouer aux différents gestionnaires d'allocation de la ressource 141 de façon à ramener la différence entre la somme des puissances disponibles à bord du satellite et la somme des puissances correspondant aux débits allouables aux différents gestionnaires d'allocation de la ressource 141 par exemple, à une valeur positive prédéterminée traduisant par exemple une marge de sécurité. Cette valeur peut par exemple être stockée dans une zone mémoire du dispositif 20 ou du système d'allocation de puissance.

Suivant un mode de mise en oeuvre du procédé selon l'invention, lorsque la marge totale de puissance mesurée est inférieure à un troisième seuil prédéterminé (ou seuil de sécurité), le dispositif d'allocation dynamique 20 peut allouer à chaque gestionnaire d'allocation de la ressource 141 une valeur de puissance définie par défaut dans le plan mission par le centre de contrôle de mission 13. Pour cela, le module d'allocation de puissance peut lire dans une zone mémoire par exemple du dispositif d'allocation 20 de puissance ou du centre de contrôle des missions 13 le plan de mission et attribuer à chaque gestionnaire d'allocation de la ressource le niveau de puissance inscrit dans la table d'allocation du plan de mission.

Suivant un mode de mise en oeuvre, un ou plusieurs des seuils précédemment cités peuvent être stockés dans une zone mémoire du système d'allocation dynamique de puissance ou du dispositif d'allocation dynamique 20.

Suivant un mode de mise en oeuvre du procédé, le module de calcul du dispositif d'allocation dynamique 20 peut également calculer le taux d'utilisation de la puissance allouée de chaque gestionnaire d'allocation de la ressource et comparer cette valeur à un taux plancher prédéterminé traduisant une sous exploitation de la puissance allouée. Lorsque le taux d'utilisation mesuré sur un gestionnaire d'allocation de la ressource 141 devient inférieur à ce taux plancher, le module d'allocation de puissance du dispositif d'allocation dynamique 20 peut réduire la puissance allouée du gestionnaire d'allocation de la ressource 141 sous exploité par exemple en réduisant la valeur de la puissance allouée au gestionnaire d'allocation de la ressource sous exploité à la valeur plancher. La puissance libérée, correspondant à la différence entre la valeur de puissance allouée et la valeur plancher, peut ainsi être réallouée à un ou plusieurs autres gestionnaires d'allocation de la ressource 141 d'un ou plusieurs réseaux d'accès satellite 14.

Le procédé suivant l'invention a été décrit en considérant les valeurs de puissance équivalente que consommeraient les transpondeurs du ou des satellites 15 pour obtenir le débit de données des gestionnaires d'allocation de la ressource 141. Cette description n'est nullement limitative et le même procédé peut être considéré en prenant en compte le débit dans chaque gestionnaire d'allocation de la ressource 141 de chacun des réseaux d'accès satellite 14.

Suivant un mode de réalisation, les différents calculs sont réalisés à l'aide d'au moins un algorithme stocké dans une zone mémoire du système d'allocation dynamique de puissance, par exemple une zone mémoire du dispositif d'allocation dynamique 20 de puissance.

Suivant un mode de réalisation, le dispositif d'allocation dynamique 20 de puissance peut être ou comprendre un ordinateur, un processeur, une unité de traitement logique ou tout autre moyen informatique équivalent.

De même, les différents modules présents dans le système d'allocation dynamique de puissance, comme par exemple les modules de calcul, les modules d'allocation de puissance, peuvent être ou comprendre un ou plusieurs ordinateurs, un ou plusieurs processeurs, une ou plusieurs unités de traitement logique une combinaison des éléments précités ou tout autre moyen informatique équivalent.

De façon avantageuse, l'invention permet d'optimiser l'utilisation de la puissance des transpondeurs du ou des satellites 15 et ainsi améliorer la capacité instantanée du ou des réseaux d'accès satellite 14 en termes de débit et/ou de disponibilité.

Elle permet également une exploitation des ressources en puissance du satellite 15 en tenant compte de la performance instantanée de la charge utile et de ses fluctuations dans le temps. Ceci permet d'optimiser dans le temps l'exploitation de la puissance satellite.

## Revendications

1. Procédé d'allocation dynamique de puissance pour un groupe d'au moins un réseau d'accès satellite (14) associé à un groupe d'au moins un satellite (15), ledit groupe d'au moins un réseau d'accès satellite (14) comprenant une pluralité de gestionnaires d'allocation de la ressource (141), ledit procédé étant mis en oeuvre par un dispositif d'allocation dynamique (20) de puissance et étant **caractérisé en ce qu'**il comprend :
- une étape d'acquisition d'un signal représentatif d'un besoin de débit dans chaque gestionnaire d'allocation de la ressource (141) de chaque réseau d'accès satellite (14),
- une étape de conversion, pour chaque gestionnaire d'allocation de la ressource (141) du groupe d'au moins un réseau d'accès satellite (14), du signal représentatif du besoin de débit dans ledit réseau d'accès satellite en une valeur correspondant à la puissance consommée à bord du satellite (15) pour obtenir ce débit,
- une étape de calcul d'une marge totale de puissance égale à la différence entre la puissance disponible à bord du satellite et la somme des puissances consommées par chaque gestionnaire d'allocation de la ressource (141),
- une étape d'allocation de puissance aux différents gestionnaire d'allocation de la ressource (141) du groupe d'au moins un réseau d'accès satellite (14), la valeur de puissance allouée étant fonction de la marge totale de puissance calculée,
le procédé étant **caractérisé en ce que** l'étape d'acquisition comprend une étape d'acquisition, issue des télémesures, d'un signal représentatif d'une puissance instantanée disponible à bord d'au moins un satellite (15).

2. Procédé suivant la revendication précédente selon lequel
- si la marge totale de puissance est supérieure à un premier seuil prédéterminée, lors de l'étape d'allocation de puissance un module d'allocation dynamique de puissance alloue aux différents gestionnaires d'allocation de la ressource (141) du groupe d'au moins un réseau d'accès satellite (14) les niveaux de puissance consommée à bord du satellite calculée précédemment,
- si la marge totale de puissance est inférieure à un second seuil prédéterminé, inférieur ou égal audit premier seuil prédéterminé, lors de l'étape d'allocation de puissance, un module d'allocation dynamique de puissance réduit la valeur des différentes puissances à allouer aux différents gestionnaires d'allocation de la ressource (141) de façon à ramener la différence entre la somme des puissances disponibles à bord du satellite et la somme des puissances correspondant aux débits souhaités par les différents gestionnaires d'allocation de la ressource à une valeur positive prédéterminée.

3. Procédé suivant la revendication précédente selon lequel lors de l'étape de réduction de puissance allouée aux différents gestionnaires d'allocation de la ressource (141), le dispositif d'allocation dynamique de puissance (20) alloue aux différents gestionnaires d'allocation de la ressource (141) un niveau de puissance prédéterminé par défaut si la marge de puissance est inférieure à un troisième seuil prédéterminé.

4. Procédé suivant une des revendications précédentes selon lequel le signal représentatif du besoin de débit pour au moins un gestionnaire d'allocation de la ressource (141) est défini en fonction du débit effectivement transmis sur une période de temps.

5. Procédé suivant une des revendications précédentes selon lequel le signal représentatif de la puissance instantanée disponible à bord d'un satellite (15) est transmis au dispositif d'allocation dynamique (20) par un centre de contrôle des satellites (11).

6. Procédé selon une des revendications précédentes selon lequel le procédé comprend en outre une étape d'acquisition d'un signal représentatif de la qualité de service associée aux données à transmettre par chaque gestionnaire d'allocation de la ressource (141) et selon lequel l'allocation de puissance est réalisée en fonction desdites informations de qualité.

7. Procédé suivant une des revendications précédentes selon lequel les différents calculs sont réalisés à l'aide d'au moins un algorithme stocké dans une zone mémoire du système d'allocation dynamique de puissance.

8. Système d'allocation dynamique de puissance configuré pour mettre en oeuvre le procédé suivant une des revendications précédentes, **caractérisé en ce qu'**il comprend un dispositif d'allocation dynamique (20) de puissance et au moins un réseau d'accès satellite (14),
ledit groupe d'au moins un réseau d'accès satellite (14) comprenant une pluralité de gestionnaires d'allocation de la ressource (141), chaque gestionnaire d'allocation de la ressource étant configuré pour transmettre des donnés à au moins un modem (142), chaque gestionnaire d'allocation de la ressource (141) étant connecté au dispositif d'allocation dynamique de puissance (20) et chaque gestionnaire d'allocation de la ressource (141) comprenant un dispositif de mesure configuré pour mesurer le débit dans ledit gestionnaires d'allocation de la ressource et délivrer un signal représentatif dudit débit et pour transmettre ce signal au dispositif d'allocation dynamique (20) de puissance,
ledit dispositif d'allocation dynamique (20) de puissance comprenant un module de calcul configuré pour recevoir des signaux représentatif de différentes grandeurs et effectuer des calculs avec ces grandeurs, un module configuré pour allouer un niveau de puissance aux différents gestionnaires d'allocation de la ressource (141) du groupe d'au moins un réseau d'accès satellite (14) et au moins une zone mémoire, le système étant **caractérisé en ce qu'**il comprend un centre de contrôle des satellites (11) configuré pour recevoir les données de télémétrie d'au moins un satellite (15), lesdites données de télémétrie comprenant la puissance instantanée disponible à bord de chaque satellite, et transmettre au dispositif d'allocation dynamique (20) de puissance un signal représentatif de la puissance instantanée disponible à bord de chaque satellite.

9. Système suivant la revendication 8 selon lequel le système comprend un centre de supervision des liaisons (12) configuré pour calculer et transmettre un signal représentatif de la puissance instantanée disponible à bord de chaque satellite.

## Patentansprüche

1. Verfahren zum dynamischen Zuweisen von Leistung für eine Gruppe von wenigstens einem Satellitenzugangsnetzwerk (14), assoziiert mit einer Gruppe von wenigstens einem Satelliten (15), wobei die Gruppe von wenigstens einem Satellitenzugangsnetzwerk (14) mehrere Ressourcenzuweisungsmanager (141) umfasst, wobei das Verfahren mit einer dynamischen Leistungszuweisungsvorrichtung (20) durchgeführt wird und **dadurch gekennzeichnet ist, dass** es Folgendes beinhaltet:
- einen Schritt des Erfassens eines Signals, das einen Durchflussbedarf in jedem Ressourcenzuweisungsmanager (141) jedes Satellitenzugangsnetzwerks (14) repräsentiert,
- einen Schritt des Umwandelns, für jeden Ressourcenzuweisungsmanager (141) der Gruppe von wenigstens einem Satellitenzuweisungsnetzwerk (14), des den Durchflussbedarf in dem Satellitenzuweisungsnetzwerk repräsentierenden Signals in einen Wert, der der an Bord des Satelliten (15) verbrauchten Leistung entspricht, um diesen Durchfluss zu erzielen,
- einen Schritt des Berechnens einer Gesamtleistungsmarge gleich der Differenz zwischen der an Bord des Satelliten verfügbaren Leistung und der Summe der verbrauchten Leistungen durch jeden Ressourcenzuweisungsmanager (141),
- einen Schritt des Zuweisens von Leistung zu den unterschiedlichen Ressourcenzuweisungsmanagern (141) der Gruppe von wenigstens einem Satellitenzuweisungsnetzwerk (14), wobei der zugewiesene Leistungswert von der berechneten Gesamtleistungsmarge abhängig ist,
wobei das Verfahren **dadurch gekennzeichnet ist, dass** der Schritt des Erfassens einen Schritt des Erfassens eines von der Telemetrie kommenden Signals beinhaltet, das eine an Bord von wenigstens einem Satelliten (15) momentan verfügbare Leistung repräsentiert.

2. Verfahren nach dem vorherigen Anspruch, gemäß dem
- wenn die Gesamtleistungsmarge höher ist als eine vorbestimmte erste Schwelle, während des Leistungszuweisungsschrittes ein Modul zur dynamischen Zuweisung von Leistung den unterschiedlichen Ressourcenzuweisungsmanagern (141) der Gruppe von wenigstens einem Satellitenzugangsnetzwerk (14) die Niveaus von an Bord des Satelliten verbrauchter Leistung wie zuvor berechnet zuweist,
- wenn die Gesamtleistungsmarge kleiner als eine vorbestimmte zweite Schwelle, gleich oder kleiner als die vorbestimmte erste Schwelle ist, während des Leistungszuweisungsschrittes, ein Modul zur dynamischen Zuweisung von Leistung den Wert von unterschiedlichen Leistungen reduziert, die den unterschiedlichen Leistungszuweisungsmanagern (141) zuzuweisen sind, um die Differenz zwischen der Summe der an Bord des Satelliten verfügbaren Leistungen und der Summe der Leistungen entsprechend den gewünschten Durchflüssen durch die unterschiedlichen Ressourcenzuweisungsmanager auf einen vorbestimmten positiven Wert zu reduzieren.

3. Verfahren nach dem vorherigen Anspruch, gemäß dem während des Schrittes des Reduzierens der den verschiedenen Ressourcenzuweisungsmanagern (141) zugewiesenen Leistung die Vorrichtung zur dynamischen Leistungszuweisung (20) den unterschiedlichen Ressourcenzuweisungsmanagern (141) vorgabemäßig ein vorbestimmtes Leistungsniveau zuweist, wenn die Leistungsmarge kleiner ist als eine vorbestimmte dritte Schwelle.

4. Verfahren nach einem der vorherigen Ansprüche, gemäß dem das Signal, das den Durchflussbedarf für wenigstens einen Ressourcenzuweisungsmanager (141) repräsentiert, in Abhängigkeit von dem effektiv über eine Zeitperiode übertragenen Durchfluss definiert wird.

5. Verfahren nach einem der vorherigen Ansprüche, gemäß dem das Signal, das die an Bord eines Satelliten (15) verfügbare momentane Leistung repräsentiert, durch ein Satellitenkontrollzentrum (11) zur dynamischen Zuweisungsvorrichtung (20) übertragen wird.

6. Verfahren nach einem der vorherigen Ansprüche, gemäß dem das Verfahren ferner einen Schritt des Erfassens eines Signals beinhaltet, das die Dienstequalität repräsentiert, die mit den von jedem Ressourcenzuweisungsmanager (141) zu übertragenden Daten assoziiert ist und gemäß dem die Leistungszuweisung in Abhängigkeit von den Qualitätsinformationen realisiert wird.

7. Verfahren nach einem der vorherigen Ansprüche, gemäß dem die verschiedenen Berechnungen mit Hilfe von wenigstens einem in einer Speicherzone des dynamischen Leistungszuweisungssystems gespeicherten Algorithmus realisiert werden.

8. System zur dynamischen Zuweisung von Leistung, konfiguriert zum Durchführen des Verfahrens nach einem der vorherigen Ansprüche, **dadurch gekennzeichnet, dass** es eine dynamische Leistungszuweisungsvorrichtung (20) und wenigstens ein Satellitenzugangsnetzwerk (14) umfasst,
wobei die Gruppe von wenigstens einem Satellitenzugangsnetzwerk (14) mehrere Ressourcenzuweisungsmanager (141) umfasst, wobei jeder Ressourcenzuweisungsmanager zum Übertragen von Daten zu wenigstens einem Modem (142) konfiguriert ist, wobei jeder Ressourcenzuweisungsmanager (141) mit der dynamischen Leistungszuweisungsvorrichtung (20) verbunden ist und wobei jeder Ressourcenzuweisungsmanager (141) eine Messvorrichtung umfasst, die zum Messen des Durchflusses in den Ressourcenzuweisungsmanagern und zum Liefern eines Signals, das den Durchfluss repräsentiert, und zum Übertragen dieses Signals zu der dynamischen Leistungszuweisungsvorrichtung (20) konfiguriert ist,
wobei die dynamische Leistungszuweisungsvorrichtung (20) Folgendes umfasst: ein Rechenmodul, konfiguriert zum Empfangen von unterschiedliche Größen repräsentierenden Signalen und zum Durchführen von Berechnungen mit diesen Größen, ein Modul, konfiguriert zum Zuweisen eines Leistungsniveaus zu den unterschiedlichen Ressourcenzuweisungsmanagern (141) der Gruppe von wenigstens einem Satellitenzugangsnetzwerk (14), und wenigstens eine Speicherzone, wobei das System **dadurch gekennzeichnet ist, dass** es ein Satellitenkontrollzentrum (11) umfasst, konfiguriert zum Empfangen der Telemetriedaten von wenigstens einem Satelliten (15), wobei die Telemetriedaten die momentan an Bord jedes Satelliten verfügbare Leistung umfassen, und Übertragen eines Signals zu der dynamischen Leistungszuweisungsvorrichtung (20), das die an Bord jedes Satelliten momentan verfügbare Leistung repräsentiert.

9. System nach Anspruch 8, gemäß dem das System ein Verbindungsüberwachungszentrum (12) umfasst, konfiguriert zum Berechnen und Übertragen eines Signals, das die an Bord jedes Satelliten momentan verfügbare Leistung repräsentiert.

## Claims

1. Method for the dynamic power allocation for a group of at least one satellite access network (14) associated with a group of at least one satellite (15), the said group of at least one satellite access network (14) comprising a plurality of resource allocation managers (141), the said method being implemented by a device (20) for dynamic allocation of power and being **characterized in that** it comprises:
- a step for acquisition of a signal representative of a data rate requirement in each resource allocation manager (141) for each satellite access network (14),
- a step for conversion, for each resource allocation manager (141) of the group of at least one satellite access network (14), of the signal representative of the data rate requirement in the said satellite access network into a value corresponding to the power consumed on board the satellite (15) in order to obtain this data rate,
- a step for calculating a total power margin equal to the difference between the power available on board the satellite and the sum of the powers consumed by each resource allocation manager (141),
- a step for allocating power to the various resource allocation managers (141) for the group of at least one satellite access network (14), the value of power allocated being a function of the calculated total power margin,
the method being **characterized in that** the step for acquisition comprises a step for acquisition coming from telemetry data, of a signal representative of an instantaneous power available on board at least one satellite (15).

2. Method according to the preceding claim, in which
- if the total power margin is higher than a first predetermined threshold, during the step for allocation of power, a module for dynamic allocation of power allocates to the various resource allocation managers (141) for the group of at least one satellite access network (14) the levels of power consumed on board the satellite previously calculated,
- if the total power margin is lower than a second predetermined threshold, less than or equal to the said first predetermined threshold, during the step for allocation of power, a module for dynamic allocation of power reduces the value of the various powers to be allocated to the various resource allocation managers (141) so as to bring the difference between the sum of the powers available on board the satellite and the sum of the powers corresponding to the data rates desired by the various resource allocation managers to a predetermined positive value.

3. Method according to the preceding claim, in which, during the step for the reduction of power allocated to the various resource allocation managers (141), the device for dynamic allocation of power (20) allocates to the various resource allocation managers (141) a predetermined level of power by default if the power margin is lower than a third predetermined threshold.

4. Method according to one of the preceding claims, in which the signal representative of the data rate requirement for at least one resource allocation manager (141) is defined according to the data rate effectively transmitted over a period of time.

5. Method according to one of the preceding claims, in which the signal representative of the instantaneous power available on board a satellite (15) is transmitted to the dynamic allocation device (20) by a satellite control centre (11).

6. Method according to one of the preceding claims, in which the method furthermore comprises a step for acquisition of a signal representative of the quality of service associated with the data to be transmitted by each resource allocation manager (141), and in which the allocation of power is applied as a function of the said information on quality.

7. Method according to one of the preceding claims, in which the various calculations are carried out by means of at least one algorithm stored in a memory area of the system for dynamic allocation of power.

8. System for the dynamic power allocation configured for implementing the following method according to one of the preceding claims, **characterized in that** it comprises a device (20) for the dynamic power allocation and at least one satellite access network (14),
the said group of at least one satellite access network (14) comprising a plurality of resource allocation managers (141), each resource allocation manager being configured for transmitting data to at least one modem (142), each resource allocation manager (141) being connected to the device for dynamic allocation of power (20) and each resource allocation manager (141) comprising a measurement device configured for measuring the data rate in the said resource allocation managers and delivering a signal representative of the said data rate and for transmitting this signal to the device (20) for the dynamic power allocation,
the said device (20) for the dynamic power allocation comprising a calculation module configured for receiving signals representative of various quantities and performing calculations with these quantities, a module configured for allocating a level of power to the various resource allocation managers (141) for the group of at least one satellite access network (14) and at least one memory area; the system being **characterized in that** it
comprises a satellite control centre (11) configured for receiving the telemetry data from at least one satellite (15), the said telemetry data comprising the instantaneous power available on board each satellite, and transmitting to the device (20) for the dynamic power allocation a signal representative of the instantaneous power available on board each satellite.

9. System according to claim 8, in which the system comprises a link supervision centre (12) configured for calculating and transmitting a signal representative of the instantaneous power available on board each satellite.
